# EUROPEAN PATENT APPLICATION

(11) **EP 1 892 072 A1**
(43) Date of publication of application: **27.02.2008**
(21) Application number: 06017448.9
(22) Date of filing: 22.08.2006
(51) Int. Cl.: B29B 17/00, B29C 45/00, B29L 31/30, B29K 101/12, B29K 105/12

(54) **Recycling fibres reinforced plastics (FRP) in injection moulding process**

(71) Applicant: HONDA MOTOR CO., LTD., Tokyo 107-8556 (JP)
(72) Inventor: Ishii, Masashi, Carl-Legien-Strasse 30 63073 Offenbach (DE)
(74) Representative: Rupp, Christian

(57) **Abstract**

The present invention describes a process of recycling heavy tow fibres reinforced plastics (FRP) composites based on a thermoplastic low viscosity resin as a matrix comprising reducing the heavy tow fibres reinforced plastics composites into small pieces to provide particles thereof and subjecting the particles to an injection moulding process.

## Description

The present invention relates to a process of recycling heavy tow fibre reinforced plastics (FRP) composites and recycled FRP composites products.

### Background of the Invention

Composite materials and in particular CFRP (carbon fibre reinforced plastics) composite materials are characterised by their low weight, great strength and high stiffness in comparison with traditional materials such as wood, steel, aluminium etc. For these reasons, they are used in a number of applications ranging from the aerospace, construction, automotive industries to the sports and medical fields.

In the 1970s, for instance, sporting good manufacturers started making use of CFRP composites in the manufacture of fishing rods, golf clubs, tennis rackets. In the 1990s, commercial plane manufacturers such as Boeing and Airbus started adopting CFRP composites for primary and secondary structural parts in order to reduce the weight of planes and have highly performing flying machines. Nowadays, because of their high strength and light weight, these CFRPs can be used for the reinforcement of structures and their use is expanding to the building and civil engineering field. The medical field also makes use of the composites for X-ray inspection equipment and even for artificial limbs. In yet another application, the performance of CFRP composites is contributing to the reduction of weight of housing electronic tools and equipment such as laptops, LCD projectors, cameras etc.

One sector where the use of composite materials is constantly evolving is the automotive industry. So far, CFRP composites have been indispensable for racing cars. However, as a result of increasing attention to environmental problems, there's a tendency to try to use these composites for commercial, mass-produced cars. Indeed, composite materials offer great potential in reducing vehicle weight, thus increasing fuel efficiency and reducing CO₂ emissions.

There are many traditional FRP manufacturing processes including pultrusion or resin moulding processes. Manufacture of fibre reinforced plastics (FRP) composites, however, requires a complex process management such as the resin transfer moulding (RTM) process which has been in use for decades. In addition, the starting materials, such as the heavy tow fibres as well as the plastics represent significant expense factors.

In the field of automotive industry, it has been established since years to recover used parts of old cars and trucks. The vital role in this recycling business is preservation of natural resources, reducing air and water pollution and solid waste generation. In addition, used recycled parts have a greater availability, a better price and superior quality.

It is therefore object of the present invention to provide a process of recycling heavy tow fibres reinforced plastics (FRP) composites which are at least as good as those produced by prior art manufacturing processes ensuring a good fibre dispersion within the plastics combined with a good fibre bonding thereto while keeping the fibre length.

### Summary of the Invention

The invention encompasses in one aspect a process of recycling heavy tow fibres reinforced plastics (FRP) composites based on a thermoplastic low viscosity resin as a matrix comprising reducing the heavy tow fibres reinforced plastics composites into small pieces to provide particles thereof, and subjecting the particles to an injection moulding process.

The invention encompasses in a second aspect a recycled FRP composite product which is obtainable by the above process.

### Brief Description of the Drawings

Further features and advantages of the invention can be ascertained from the following detailed description that is provided in connection with the drawings described below:
- Fig. 1: is a diagram illustrating the pressure profile used in the process of the present invention.
- Fig. 2: shows a comparison between recycled heavy tow fibres reinforced plastics produced according to the present invention and produced by compression moulding.
- Fig. 3: shows the tensile/flexural strength of recycled material produced according to the process of the present invention in comparison with market virgin materials.

### Detailed Description of the Preferred Embodiments

The recycling process of the present invention surprisingly and unexpectedly provides recycled heavy tow fibres reinforced plastic products having a good adhesion between the heavy tow fibres and the plastic matrix, an optimum heavy tow fibres volume fraction which ensures an optimum heavy tow fibres distribution in the plastic matrix and fibre lengths corresponding to those of conventionally produced heavy tow fibres reinforced plastic composites.

The process of the present invention is based on a two-step procedure. In the first step, the heavy tow fibre reinforced plastics composites to be recycled are reduced into small pieces to provide particles thereof.

In principle, any used heavy tow fibres reinforced plastic composites may be subjected to this size reduction procedure. Examples of heavy tow fibres reinforced plastics composites are those dismantled from cars, trucks and planes.

In the second step of the process of the present invention, the particles are subjected to an injection moulding process. Basically, injection moulding is the process of forcing melted plastic into a mould cavity. Once the plastic has cooled, the part can be ejected. In the process of the present invention, any injection moulding device may be used.

In order to achieve a good distribution of the fibre length after the injection moulding process, the used heavy tow fibres reinforced plastics composites have to be reduced into small pieces under controlled scale-down. The resulting particles should not be too course in order to avoid clogging of the injection moulding machine. On the other hand, the particles should not be too fine which would cause insufficient mechanical mixture of the fine powder resulting in a very small fibre length.

There is no particular limitation as to the method how to reduce the fibres reinforced plastic composites into small pieces. Examples therefore are grinding, shredding, hackling or cutting, with grinding being preferred.

According to an embodiment of the process of the present invention, the particles obtained in the form of flakes have a size in the range of 3 mm x 3 mm to 12 mm x 12 mm. More preferred, the particles have a size in the range of 5 mm x 5 mm to 10 mm x 10 mm, most preferred 8 mm x 8 mm.

The shape of the particles is not very critical. Examples of suitable shapes are spherical, geometrical and flake-like shapes. However, it is preferred that the particles have a flake-like shape.

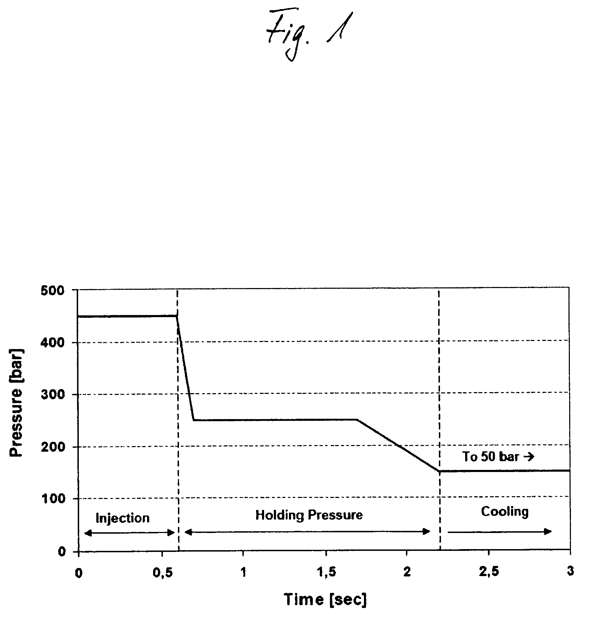

The injection moulding process of the second step using the particles of the used heavy tow fibres reinforced plastic composites as described above is carried out in a conventional injection moulding machine. Fig. 1 shows an example of the pressures for the different injection moulding phases of carbon fibre reinforced polybutylene terephthalate (CF/PBT) in relation to the time. In a preferred embodiment of the process of the present invention, the injection moulding is carried out at a pressure of 600 to 100 bar, preferably in a range of 500 to 80 bar, most preferred 450 to 50 bar. As can be taken from Fig. 1, the pressure is reduced by approx. 50 % shortly after injection, followed by a period of holding pressure. The pressure is then reduced to 50 bar in a final cooling period.

After solidification, the recycled product can be demodulated as usual. The shape of the mould is not limited. If desired, a two-part mould can be used.

The fibres contained in the composites to be recycled are carbon fibres, glass fibres, other fibres or a mixture thereof. In a preferred embodiment of the process of the present invention, the fibres contained in the composites are carbon fibres.

It is preferable that the fibres contained in the composites to be recycled have a tow equal to or greater than 24,000 filaments (24 K).

The fibres contained in the composites to be recycled can be assembled in many different ways. For instance, unidirectional arrangements such as tapes, strips, fabrics or even single tow can be used. The fibre can be used as twisted yarn, untwisted yarn or non-twisted yarn. Furthermore, the tows can be weaved into a cloth with interlacing points. The woven fabric (in the form of mats, knitted fabrics etc.) may be balanced or multiaxial. The style of weaving may be a plain weave, a twill weave or a satin weave.

In addition to the carbon fibres, inorganic fibres such as glass fibres, alumina fibres, or silicon nitride fibres, or organic fibres such as aramid fibres or nylon may be used. These fibres may be long fibres, short fibres, woven fabric, a mattress, or a combination of these, and may be orderly or disorderly arranged in the carbon fibres. Preferably these will be glass fibres.

The heavy tow fibres reinforced plastic composites to be recycled are based on a thermoplastic low viscosity resin (<50mPa•s) as a matrix. More preferred are composites wherein the fibres are impregnated with the thermoplastic low viscosity resin.

It has been shown that heavy tow fibres reinforced plastics composites based on fibres impregnated with a thermoplastic low viscosity resin provide particles which are readily flowing when feeding the injection moulding machine. The reason is that the particles obtained comprise the fibre bundles perfectly glued together by the low viscosity matrix. This better performance ensures an efficient course of the process in recycling the composites.

The low viscosity resin is a thermoplastic resin. As used herein, the term "thermoplastic resin" is meant to include those polymers which soften when exposed to heat and then return to original condition when cooled to room temperature. Examples of thermoplastic resins include ABS (acrylonitrile, butadiene and styrene) resin, acrylic/PMMA (polymethylmethacrylate) resin, ethylene tetrafluorethylene resin, EVA (ethylene vinyl acetate) resin, HDPE (high density polyethylene) resin, LDPE (low density polyethylene) resin, LLDPE (linear low density polyethylene) resin, Masterbatch resin, nylon, perfluoralkoxy resin, polyacetal resin, polyamide resin, polybuylene terephthalate resin, polycarbonate resin, polyetheretherketone resin, polyetherimide resin, polyethersulfone resin, polyethylene terephthalate resin, polyimide resin, polyphenylene oxide resin, polypropylene (homopolymer and copolymer) resin, polysulfone resin, polystyrene (crystal and impact) resin, polyurethane resin, polyvinyl chloride resin.

The volume content of the fibres in the recycled heavy tow fibres reinforced plastics composites obtained by the process of the present invention is preferably less than 30 %, more preferred less than 25 % with a fibre length in a range of 1 to 5 mm, more preferred 1 to 3 mm, most preferred 1 to 2 mm.

Decreasing the fibre length in the injection moulding process is due to the high shear forces in the process. A reduction from 6 mm to 8 mm to 1 mm to 5 mm in fibre length is usual during injection moulding of long fibre particles. In contrast thereto, the fibre length in short fibre composites usually amounts to 100 µm to 600 µm, preferably 200 µm to 300 µm.

In a particular preferred embodiment of the present invention, the recycled FRP composite product is a carbon fibres reinforced product (CFRP) composite.

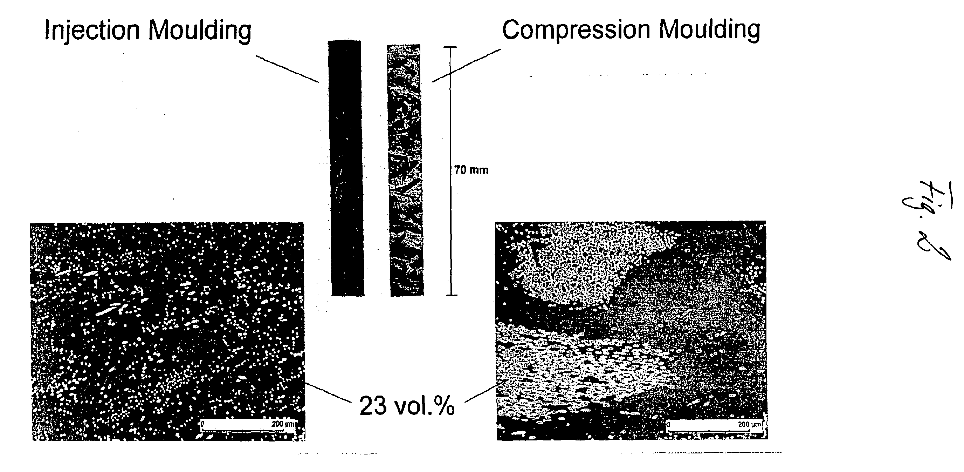

It has been shown that injection moulding provides the best results with respect to a homogenous fibre distribution in the recycled composite. As shown in Fig. 2, where recycled composite samples have been examined, the composites produced by injection moulding exhibit a good dispersion of the broken fibre bundles contained in the matrix. In contrast thereto, a composite treated with compression moulding shows a poor dispersion of the fibres, with fibre bundle agglomerates still present in the resin matrix. This can be easily taken from the photographs showing in case of the compression moulded composites islands of fibre bundle agglomerates resulting in an extremely inhomogenous fibre distribution and thus to inferior recycled products.

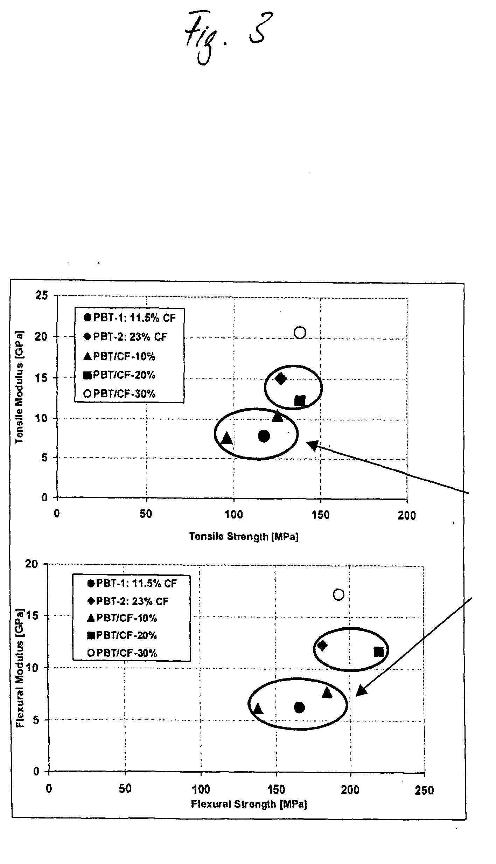

A recycled heavy tow fibre reinforced plastics composite product produced by the process of the present invention has been compared with commercially available carbon fibre reinforced products. The product obtained according to the process of the present invention as well as the commercially available products have been tested on their tensile strength and flexural strength. The results of the comparative tests can be seen in Fig. 3.

In Fig. 3, PBT-2 is a recycled product according to the present invention based on polybutylene terephthalate containing 23 % carbon fibres. The comparative commercially available products are PBT/CF containing 10 %, 20 % and 30 % carbon fibres. The tensile strength of the product of the invention PBT-2 is about 125 MPa. The flexural strength for PBT-2 is about 175 MPa. These values show that the recycled composite products do have the same or even better physical properties as the commercially available products.

The recycled heavy tow fibres reinforced plastics show an excellent adhesion between the fibres and the matrix while maintaining a good fibre distribution of the fibres in the matrix. The recycled products have a superior quality and contribute to environmental conservation.

## Claims

1. A process of recycling heavy tow fibres reinforced plastics (FRP) composites based on a thermoplastic low viscosity resin as a matrix comprising
- reducing the heavy tow fibres reinforced plastics composites into small pieces to provide particles thereof, and
- subjecting the particles to an injection moulding process.

2. The process according to claim 1 wherein the fibres reinforced plastics composites are reduced into small pieces by grinding, shredding, hackling or cutting.

3. The process according to claim 1 and/or 2 wherein the fibre reinforced plastics composites are reduced to particles having a size in the range of 3 mm x 3 mm to 12 mm x 12 mm.

4. The process according to claim 3 wherein the particles have a size in the range of 5 mm x 5 mm to 10 mm x 10 mm.

5. The process according to claim 4 wherein the particles have a size in the range of 8 mm x 8 mm.

6. The process according to any one of claims 1 to 5 wherein the injection moulding is carried out at a pressure of 600 to 100 bar.

7. The process according to claim 6 wherein the pressure is applied in the range of 500 to 80 bar.

8. The process according to claim 7 wherein the pressure is applied in the range of 450 to 50 bar.

9. The process according to any one of claims 1 to 8 wherein the fibres contained in the composites are carbon fibres, glass fibres, other fibres or a mixture thereof.

10. The process according to any of the preceding claims wherein the tow of the carbon fibres, glass fibres and/or other fibres is equal to or greater than 24K.

11. The process according to any of the preceding claims wherein the fibres are impregnated with the thermoplastic low viscosity resin matrix.

12. A recycled heavy tow FRP composite product obtainable by the process according to any one of claims 1 to 11.

13. The recycled FRP composite product according to claim 12 wherein the volume content of the fibres in the composite is less than 30%.

14. The recycled FRP composite product according to claim 13 wherein the volume content of the fibres in the composite is less than 25%.

15. The recycled FRP composite product according to any one of claims 12 to 14 having a fibre length in the range of 1 to 5 mm.

16. The recycled FRP composite product according to claim 15 having a fibre length in the range of 1 to 3 mm.

17. The recycled FRP composite product according to any one of claims 12 to 16 being a carbon fibres reinforced product (CRFP) composite.
